**Europäisches Patentamt**

**European Patent Office**

**Office européen des brevets**

(11) Veröffentlichungsnummer: **0 191 300
B1**

(12)

# EUROPÄISCHE PATENTSCHRIFT

(45) Veröffentlichungstag der Patentschrift:
**03.08.88**

(51) Int. Cl.⁴: **B 23 K 11/20**

(21) Anmeldenummer: **86100321.8**

(22) Anmeldetag: **11.01.86**

(54) Widerstandsverbindungsverfahren zum Löten oder Schweissen metastabiler Metalle.

(30) Priorität: **13.02.85 DE 3504861**

(43) Veröffentlichungstag der Anmeldung:
**20.08.86 Patentblatt 86/34**

(45) Bekanntmachung des Hinweises auf die Patenterteilung:
**03.08.88 Patentblatt 88/31**

(84) Benannte Vertragsstaaten:
**AT CH DE FR GB IT LI NL SE**

(56) Entgegenhaltungen:
**DE - A - 2 944 523
DE - A - 3 218 284**

(73) Patentinhaber: **VACUUMSCHMELZE GMBH, Grüner Weg 37 Postfach 2253, D-6450 Hanau 1 (DE)**

(72) Erfinder: **Hock, Stefan, Dipl.-Ing., Max Liebermannweg 16, D-7032 Sindelfingen (DE)**

## Beschreibung

Die Erfindung betrifft ein Widerstandsverbindungsverfahren zum Löten oder Schweissen metastabiler Metalle untereinander oder mit anderen metallischen Werkstoffen durch Aneinanderpressen der zu verbindenden Teile und durch kurzzeitige Erhitzung der Anordnung mit Hilfe eines zwischen zwei Elektroden fliessenden elektrischen Stromes, wobei sich zwischen den zu verbindenden Teilen eine Zwischenschicht befindet.

Widerstandslöt- und Schweissverfahren sind im Prinzip seit langem bekannt (Dubbel «Taschenbuch für den Maschinenbau», 14. Auflage, (1981), Seiten 1044 und 1045). Die zu verbindenden Teile werden dabei — gegebenenfalls zusammen mit einem Lot — zwischen zwei Elementen eingepresst. Mit Hilfe eines kurzzeitigen, sehr hohen elektrischen Stromes wird der zwischen den Elektroden befindliche Bereich der miteinander zu verbindenden Teile infolge des elektrischen Widerstandes kurzzeitig erhitzt, so dass eine Schweiss- bzw. Lötverbindung innerhalb dieses Bereichs entsteht.

Aus der DE-A-1-2 751 025 ist es weiterhin bekannt, derartige Verfahren bei amorphen Metallen anzuwenden.

Amorphe Metalle lassen sich z.B. durch schnelle Abschreckung einer Metallegierung aus der Schmelze herstellen. Hierbei verhindern in der Legierung vorhandene Metalloide, wie z.B. Silizium, Bor, Phosphor, Kohlenstoff, dass sich innerhalb des Gefüges Kristalle bilden. Es entsteht dabei ein amorphes, metastabiles Gefüge, das bei Erwärmung über die von der Legierung und Erwärmungsdauer abhängige sogenannte Kristallisationstemperatur instabil wird, was zur Kristallbildung führt. Das gleiche gilt für metastabile, kristalline Werkstoffe, die z.B. durch schnelle Abschreckung gewonnen werden können. Aus diesem Grunde liegt es auf der Hand, dass für schnell abgeschreckte Materialien, die meistens in Form von dünnen Bändern vorliegen, nur Schweissbzw. Lötverfahren ohne oder nur mit sehr kurzer Erhitzung und anschliessender schneller Abkühlung verwendet werden können, wenn man eine Kristallbildung oder Gefügeumwandlung im Bereich des Verbindungspunktes vermeiden will.

Aufgabe der vorliegenden Erfindung ist es, ein Verfahren anzugeben, bei dem diese Bedingung unter Verwendung eines Widerstandsverbindungsverfahrens besonders gut eingehalten werden kann.

Erfindungsgemäss wird diese Aufgabe durch die im Patentanspruch 1 genannten Merkmale gelöst. Vorteilhafte Weiterbildungen sind in den Unteransprüchen beschrieben.

Verschiedene Ausführungsbeispiele der Erfindung sind in den Figuren 1 bis 4 dargestellt. Figuren 5 und 6 zeigen Querschnitte einer mit Hilfe des erfindungsgemässe Verfahrens hergestellten Verbindung.

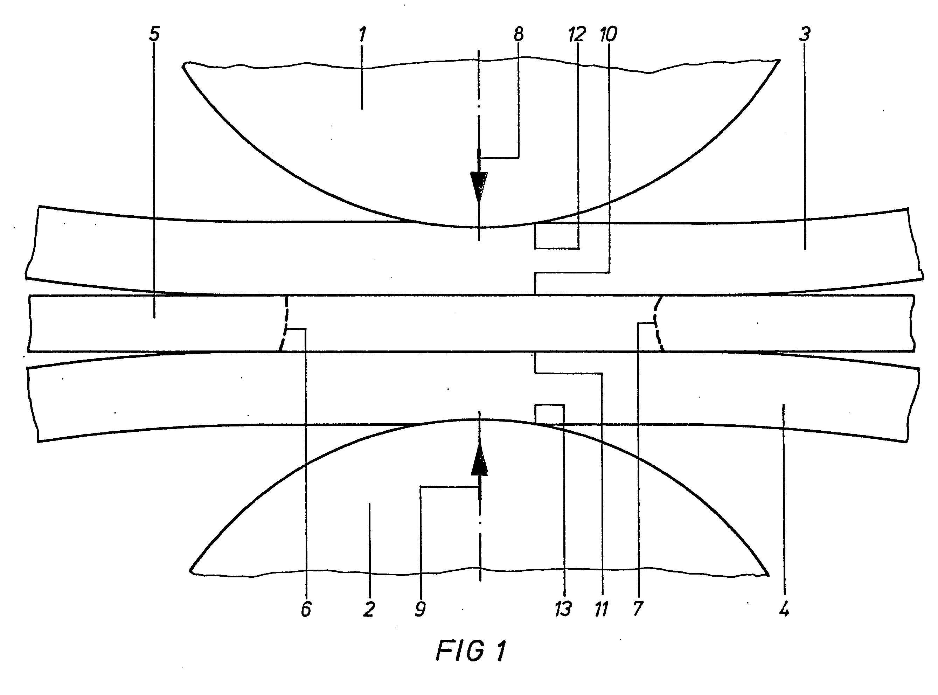

Für die Anwendung des Verfahrens kann eine der bekannten Widerstandslöt- oder Schweissvorrichtungen verwendet werden, beispielsweise, wie sie in dem genannten «Taschenbuch für den Maschinenbau» von Dubbel auf Seite 1044 im Bild 3 schematisch dargestellt ist. Von dieser Anordnung sind in Figur 1 Ausschnittvergrösserungen der Elektroden 1 und 2 dargestellt, zwischen denen sich zwei schnell abgeschreckte amorphe Metallbänder 3 und 4 befinden. Zwischen diese Metallbänder 3 und 4 ist als Zwischenschicht 5 eine ebene Lötfolie gelegt. Die gestrichelten Linien 6 und 7 kennzeichnen den Bereich, in dem ein Aufschmelzen der Zwischenschicht erfolgt. Die Pfeile 8 und 9 geben die Richtung der Kraft an, mit der die Elektroden 1 und 2 zusammengepresst werden. Diese Kraft ist vorzugsweise kleiner als 50 N, wird aber so gross gewählt, dass keine Funkenbildung zwischen den Elektroden 1 und 2 und den Metallbändern 3 und 4 auftritt. Anstelle dieser Anordnung ist es auch möglich, die Elektroden nebeneinander auf der gleichen Seite der zu verbindenden Teile anzuordnen und gegen ein den Elektroden gegenüberliegendes Klemmelement ohne elektrische Funktion zu pressen. Die auf unter 50 N begrenzte Andruckkraft bewirkt, dass an den Grenzschichten 10 und 11 zwischen der Zwischenschicht 5 und den Metallbändern 3 und 4 sich ein relativ hoher Übergangswiderstand für den zwischen den Elektroden 1 und 2 fliessenden elektrischen Strom ergibt. Hierdurch und eventuell durch Wahl eines elektrisch schlecht leitenden Werkstoffes für die Zwischenschicht lässt sich erreichen, dass der Widerstand von Zwischenschicht 5 und Grenzschichten 10 und 11 vorzugsweise grösser, mindestens aber halb so gross ist wie der Widerstand der übrigen Teile und Grenzschichten zwischen den Elektroden.

Hierdurch lässt sich abhängig von der Empfindlichkeit der zu verbindenden Werkstoffe gegen Gefügeumwandlungen bzw. Kristallisation eine ausreichende Konzentration der entstehenden Wärmeenergie auf die Zwischenschicht 5 in dem zwischen den gestrichelten Linien 6 und 7 liegenden Bereich erreichen.

Weiterhin ist die Dicke der Zwischenschicht 5, in Richtung der durch die Pfeile 8 und 9 gekennzeichneten Anpresskraft gemessen, geringer als das Doppelte der Dicke jedes der beiden Metallbänder 3 und 4, die im Ausführungsbeispiel ein amorphes Gefüge haben mögen. Weiterhin ist hier der Schmelzpunkt der Zwischenschicht 5 niedriger als der des Materials der Metallbänder. Dies bedingt, dass die zum Verbinden (Aufschmelzen der Lots) notwendige Wärmeenergie gering gehalten wird, so dass ein Stromstoss von z.B. 20 µsec das relativ geringe Volumen des erwärmten Bereichs der Zwischenschicht 5 zum Schmelzen bringt. Nach Beendigung des Stromstosses ergibt sich eine sehr schnelle Abkühlung, so dass eine Kristallbildung in den amorphen Metallbändern 3 und 4 vollständig oder nahezu vollständig verhindert werden kann.

Um die entstehende Wärme auf die Zwischenschicht 5 zu konzentrieren, soll diese vorzugsweise einen möglichst hohen spezifischen elektrischen Widerstand besitzen. Da amorphe Metalle in der Regel einen erhöhten spezifischen Widerstand aufweisen, ist es vorteilhaft, die Zwischenschicht 5 ebenfalls aus einem amorphen Material herzustellen. Weiterhin ist es vorteilhaft, wenn die Zwischenschicht gegenüber einem der Metallbänder 3 und 4 einen höheren Legierungsgehalt an elektrisch nicht leitenden Elementen (Metalloide) enthält und damit eine geringere elektrische Leitfähigkeit gegenüber den Metallbändern 3 und 4 besitzt. Anstelle einer zwischengelegten Folie kann die Zwischenschicht auch auf eines der zu verbindenden Teile aufgebracht sein.

Es ist weiterhin von Vorteil, wenn die Oberflächen der Zwischenschicht (5) leicht aufgerauht sind.

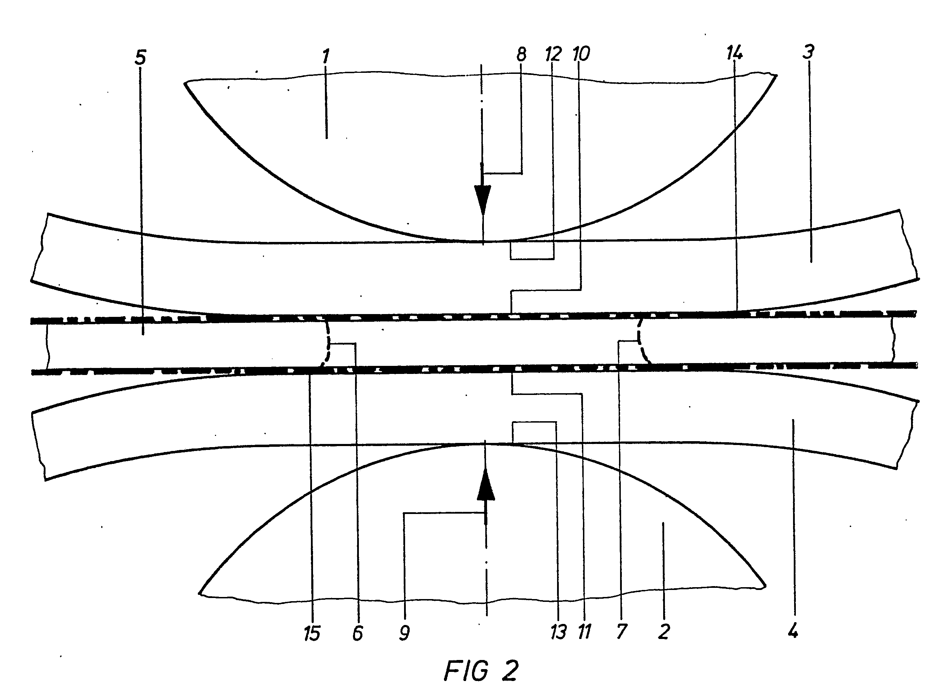

In Figur 2 sind gleiche Teile wie in Figur 1 mit gleichen Bezugszeichen versehen. Im Unterschied zum Ausführungsbeispiel nach Figur 1 wird hier als Zwischenschicht 5 eine Folie verwendet, deren Oberfläche mit unterbrochenen Isolierschichten 14 und 15 versehen ist. Diese Isolierschichten lassen sich beispielsweise durch Beschichten der Folie mit einem schlecht dehnbaren Isoliermaterial und durch anschliessendes Recken oder Walzen erzielen. Beim Reck- oder Walzvorgang wird die Folie sich plastisch verformen, während die aufgebrachten Isolierschichten an einzelnen Stellen reissen und sich so Unterbrechungen in den Isolierschichten ergeben. Die Verwendung einer derartigen Folie führt beim Lötvorgang dazu, dass sich der Widerstand der Grenzschichten 10 und 11 insgesamt erhöht und dass die Stromdichte an den einzelnen Unterbrechungsstellen der Isolierschichten 14 und 15 vergrössert wird. Damit sind Verbindungen bei weiterer Verkürzung der Schweisszeit bei gegebenem elektrischem Strom herstellbar.

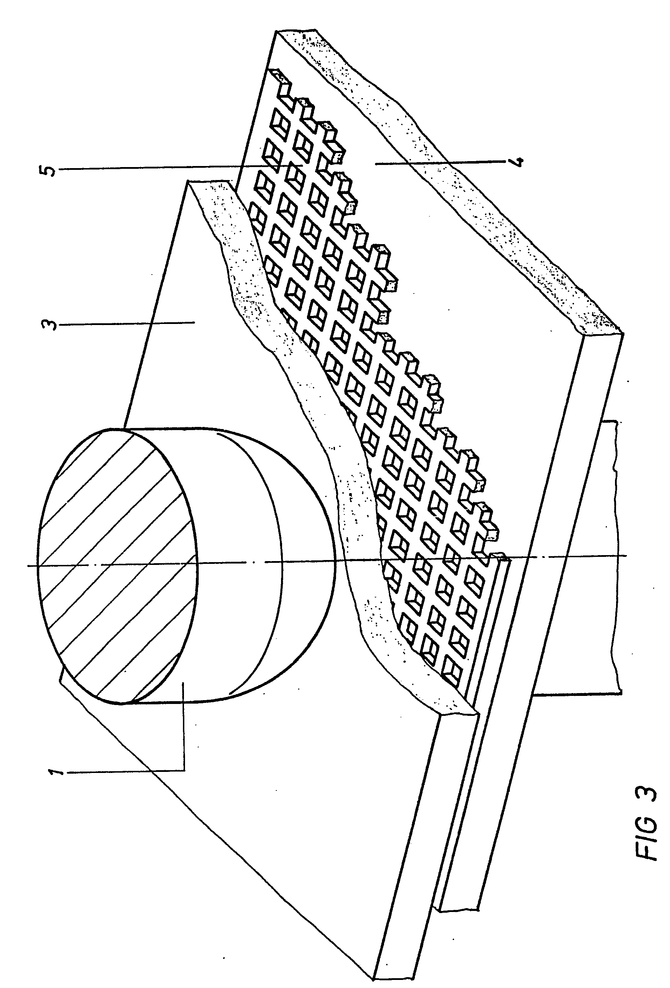

Eine weitere Möglichkeit zur Erreichung einer sehr kurzen Erhitzungszeit ist in Figur 3 dargestellt. Hier besitzt die Zwischenschicht 5 eine Gitterstruktur, die ebenfalls den stromtragenden Querschnitt und damit den Übergangswiderstand im Bereich der Zwischenschicht 5 vergrössert. Anstelle der dargestellten Gitterstruktur ist es selbstverständlich auch möglich, ein Geflecht oder andere Strukturen mit einer Vielzahl von Unterbrechungen zu verwenden.

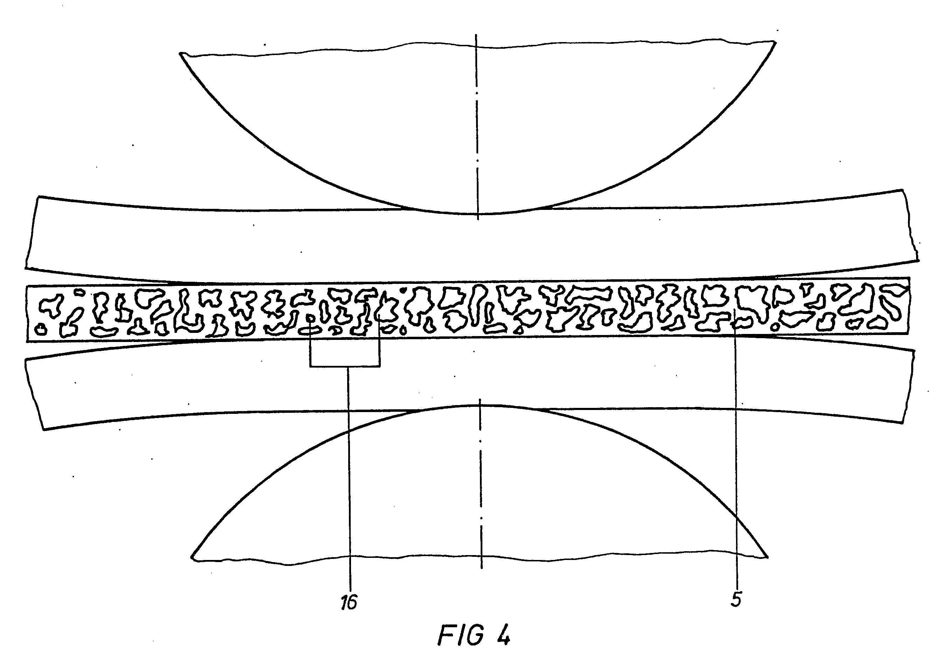

In Figur 4 ist eine weitere Möglichkeit für die Ausbildung der Zwischenschicht 5 dargestellt. Hier besteht die Zwischenschicht 5 aus einem Metallpulver, das in eine elektrisch nicht leitende Matrix eingebettet ist.

Allgemein ist es weiterhin von Vorteil, für die Zwischenschicht 5 ein Material mit einer Solidustemperatur unterhalb von 700°C vorzusehen, und die Lötzeit kürzer als eine Millisekunde, vorzugsweise kürzer als 0,2 msec zu wählen.

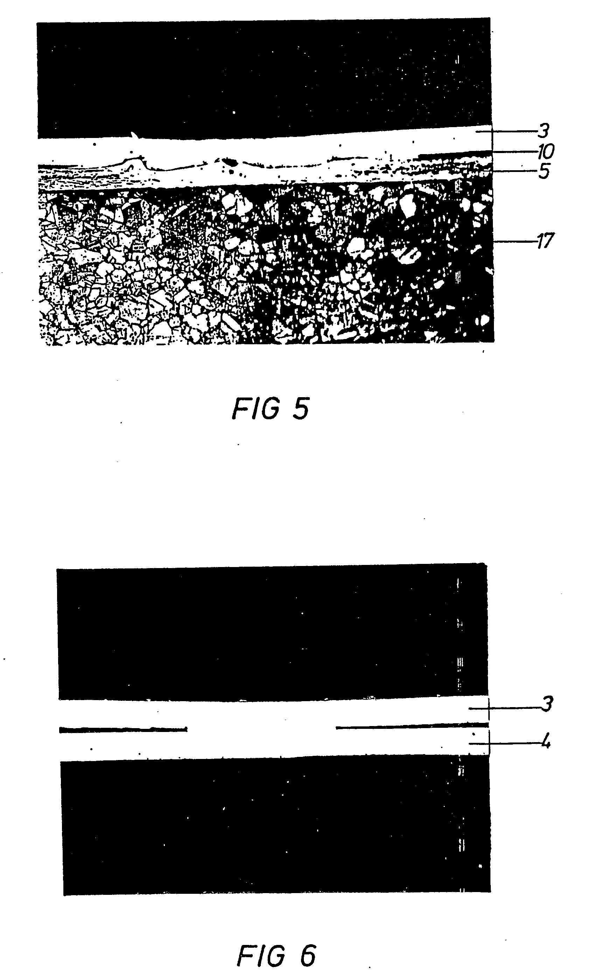

Figur 5 zeigt ein Beispiel, in dem ein amorphes Metallband 3 mit einem Messingkörper 17 verbunden wurde. Die Grenzschicht 10 zwischen der Zwischenschicht 5 und dem amorphen Metallband 3 verläuft hier unregelmässig, ein Zeichen, dass sowohl das amorphe Metallband 3 als auch die Zwischenschicht 5 aufgeschmolzen wurden. Bei diesem Versuch wurde ein amorphes Metallband 3 aus der Legierung $Ni_{78}Si_8B_{14}$ von ca. 32 µm Dicke mit einem Messingkörper 17 aus ca. 1 mm dicken Blech (Cu 39 Gew.-% Zn, 2 Gew.-% Pb) verbunden. Als Zwischenlage diente eine Hartlotfolie von ca. 27 µm Dicke aus der Legierung Degussa 4900 (Zusammensetzung in Gew.-%: 49 Ag, 16 Cu, 23 Zn, 7,5 Mn, 4,5 Ni, Schmelzbereich 625 bis 705°C). Die spezifische elektrische Leitfähigkeit des amorphen Metallbandes 3 liegt bei $1,1 \dfrac{m}{\Omega\,mm^2}$, die der Harlotfolie bei

$4 \dfrac{m}{\Omega\,mm^2}$ und die des Messing um $15 \dfrac{m}{\Omega\,mm^2}$. Die Verbindungspartner wurden mit einer Spannkraft von 15 N zwischen zwei Kupferelektroden geklemmt und ein Strom von ca. 800 bis 1000 A für die Dauer von 0,2 msec aufgebracht. Es entstand eine feste Verbindung, die nur schwer zu zerreissen war.

Ein amorphes Metallband 3 aus der gleichen Legierung wurde nach dem gleichen Verfahren wie oben mit einem gleichartigen Metallband 4 verbunden. Die Zwischenlage war jetzt eine 25 µm dicke Lötfolie aus der Lötlegierung Degussa 2700 (Zusammensetzung in Gew.-%: 27 Ag, 38 Cu, 20 Zn, 9,5 Mn, 5,5 Ni, Schmelzbereich 680 bis 830°C, Leitfähigkeit $2,7 \dfrac{m}{\Omega\,mm^2}$). Die Stromzeit war nur 0,1ms, die Andruckkraft nur 5 N. Die amorphen Metallbänder waren hier mit 60 µm relativ dick und damit gegen Temperatureinflüsse extrem empfindlich. Auch diese Verbindung liess sich nur schwer zerreissen, obwohl auch hier die amorphen Metallbänder mit aufgeschmolzen sind. Eine Verkürzung der Stromzeit auf 0,02 msec bei Verwendung einer gitterförmigen Nickelfolie als Zwischenschicht (5) ergibt — wie Figur 6 zeigt — eine gute Verbindung ohne erkennbare Kristallisation.

## Patentansprüche

1. Widerstandsverbindungsverfahren zum Löten oder Schweissen metastabiler Metalle untereinander oder mit anderen metallischen Werkstoffen durch Aneinanderpressen der zu verbindenden Teile und durch kurzzeitige Erhitzung der Anordnung mit Hilfe eines zwischen zwei Elektroden (1, 2) fliessenden elektrischen Stromes, wobei sich zwischen den zu verbindenden Teilen (3, 4) eine Zwischenschicht (5) befindet, dadurch gekennzeichnet, dass die Abmessung der Zwischenschicht (5) in Richtung der auf die zu verbindenden Teile wirkenden Presskraft die in gleicher Richtung vorliegende Abmessung keines der zu verbindenden Teile (amorphes Metallband 3, 4) um mehr als das Doppelte überschreitet und dass der elektrische Widerstand der Zwischenschicht einschliesslich der Grenzschichten (10, 11) zu den zu verbindenden Teilen (Metallbänder 3, 4) grösser ist als der Widerstand der übrigen an die Elektroden (1, 2) angrenzenden Teile (Metallband 3, 4) bzw. Grenzschichten (12, 13).

2. Widerstandsverbindungsverfahren nach Anspruch 1, dadurch gekennzeichnet, dass die Andruckkraft zwischen den Elektroden (1, 2) in Richtung der Pfeile (8, 9) kleiner ist als 50 N.

3. Widerstandsverbindungsverfahren nach Anspruch 1, dadurch gekennzeichnet, dass die Zwischenschicht (5) wenigstens eine aufgerauhte Oberfläche besitzt.

4. Widerstandsverbindungsverfahren nach Anspruch 1, dadurch gekennzeichnet, dass die Zwischenschicht (5) aus einer Isolierschicht (14, 15) besteht, die Unterbrechungen aufweist.

5. Widerstandsverbindungsverfahren nach Anspruch 4, dadurch gekennzeichnet, dass die Isolierschicht auf eine als Lötfolie wirkende Zwischenschicht (5) aufgebracht ist.

6. Widerstandsverbindungsverfahren nach Anspruch 1, dadurch gekennzeichnet, dass die Zwischenschicht (5) eine Vielzahl von Unterbrechungen besitzt, so dass sie eine gitterförmige Struktur aufweist (Figur 3).

7. Widerstandsverbindungsverfahren nach Anspruch 1, dadurch gekennzeichnet, dass die Zwischenschicht (5) aus einem Metallpulver besteht, das in eine elektrisch nicht leitende Matrix eingebettet ist.

8. Widerstandsverbindungsverfahren nach Anspruch 1, dadurch gekennzeichnet, dass die Zwischenschicht (5) aus einem amorphen Material besteht.

9. Widerstandsverbindungsverfahren nach Anspruch 1, dadurch gekennzeichnet, dass die Solidustemperatur der Zwischenschicht (5) unterhalb von 700°C liegt.

10. Widerstandsverbindungsverfahren nach Anspruch 1, dadurch gekennzeichnet, dass die Dauer des zwischen den Elektroden (1, 2) fliessenden Stromes pro Verbindungsstelle unterhalb einer Millisekunde, vorzugsweise unterhalb 0,2 msec liegt.

11. Widerstandsverbindungsverfahren nach Anspruch 1, dadurch gekennzeichnet, dass die Abmessung der Zwischenschicht (5) in Richtung der auf die zu verbindenden Teile wirkenden Presskraft die in gleicher Richtung vorliegende Abmessung keines der zu verbindenden Teile (amorphes Metallband 3, 4) überschreitet.

12. Widerstandsverbindungsverfahren nach Anspruch 1, dadurch gekennzeichnet, dass die Zwischenschicht (5) einen metallischen Werkstoff mit einer gegenüber den zu verbindenden Teilen niedrigeren Solidustemperatur enthält.

**Claims**

1. A resistance-joining process for soldering or welding metastable metals to one another or to other metallic materials, by pressing the parts to be joined one against another and by briefly heating the arrangement by means of an electrical current flowing between two electrodes (1, 2), an intermediate layer (5) being arranged between the parts (3, 4) to be joined, characterised in that the measurement of the intermediate layer (5) in the direction of the pressing force which acts upon the parts to be connected does not exceed more than double the measurement, measured in the same direction, of any of the parts (amorphous metal strips 3, 4) to be joined, and that the electrical resistance of the intermediate layer, including the boundary layers (10, 11) at the parts (metal strips 3, 4) to be joined, exceeds the resistance of the remaining parts (metal strips 3, 4) and boundary layers (12, 13) which adjoin the electrodes (1, 2).

2. A resistance-joining process as claimed in Claim 1, characterised in that the pressing force between the electrodes (1, 2) in the direction of the arrows (8, 9) is less than 50 N.

3. A resistance-joining process as claimed in Claim 1, characterised in that the intermediate layer (5) has at least one roughened surface.

4. A resistance-joining process as claimed in Claim 1, characterised in that the intermediate layer (5) consists of an insulating layer (14, 15) containing interruptions.

5. A resistance-joining process as claimed in Claim 4, characterised in that the insulating layer is applied to an intermediate layer (5) which serves as a solder foil.

6. A resistance-joining process as claimed in Claim 1, characterised in that the intermediate layer (5) contains a plurality of interruptions so that it has a lattice-shaped structure (Fig. 3).

7. A resistance-joining process as claimed in Claim 1, characterised in that the intermediate layer (5) consists of a metal powder which is embedded in an electrically non-conducting matrix.

8. A resistance-joining process as claimed in Claim 1, characterised in that the intermediate layer (5) consists of an amorphous material.

9. A resistance-joining process as claimed in Claim 1, characterised in that the solidus temperature of the intermediate layer (5) is below 700°C.

10. A resistance-joining process as claimed in Claim 1, characterised in that the duration of the current flowing between the electrodes (1, 2) in respect of each connection point is less than 1 millisecond, preferably less than 0.2 msec.

11. A resistance-joining process as claimed in Claim 1, characterised in that the measurement of the intermediate layer (5) in the direction of the pressing force which acts upon the parts to be joined, does not exceed the measurement, measured in the same direction, of any of the parts to be joined (amorphous metal strips 3, 4).

12. A resistance-joining process as claimed in Claim 1, characterised in that the intermediate layer (5) contains a metallic material with a solidus temperature which is lower than that of the parts to be joined.

**Revendications**

1. Procédé d'assemblage par résistance pour braser ou souder des métaux métastables, entre eux ou bien avec d'autres matériaux métalliques, en pressant l'une contre l'autre les parties à assembler et en réchauffant l'assemblage pendant une courte période de temps à l'aide d'un courant électrique circulant entre deux électrodes (1, 2), une couche intermédiaire (5) se trouvant entre les parties (3, 4) à assembler, procédé caractérisé en ce que la dimension de la couche intermédiaire (5), en direction de l'effort de pressage agissant sur les parties à assembler, ne dépasse de plus du double la dimension, dans la même direction, d'aucune des parties à assembler (bandes métalliques amorphes 3, 4) et que la résistance électrique de la couche intermédiaire, y compris les couches limites (10, 11) vers les parties à assembler (bandes métalliques 3, 4), est supérieure à la résistance des autres pièces (bandes métalliques 3, 4) contiguës aux électrodes (1, 2) ou des couches limites (12, 13).

2. Procédé d'assemblage par résistance selon la revendication 1, caractérisé en ce que l'effort de pressage entre les électrodes (1, 2), en direction des flèches (8, 9), est inférieur à 50 N.

3. Procédé d'assemblage par résistance selon la revendication 1, caractérisé en ce que la couche intermédiaire (5) comporte au moins une surface rendue rugueuse.

3. Procédé d'assemblage par résistance selon la revendication 1, caractérisé en ce que la couche intermédiaire (5) est constituée par une couche isolante (14, 15) comportant des lacunes.

5. Procédé d'assemblage par résistance selon la revendication 4, caractérisé en ce que la couche isolante est rapportée sur une couche intermédiaire (5) jouant le rôle de feuille de brasage.

6. Procédé d'assemblage par résistance selon la revendication 1, caractérisé en ce que la couche intermédiaire (5) comporte un grand nombre de lacunes, de sorte qu'elle a une structure en forme de grille (figure 3).

7. Procédé d'assemblage par résistance selon la revendication 1, caractérisé en ce que la couche intermédiaire (5) est constituée par une poudre métallique insérée dans une matrice non électriquement conductrice.

8. Procédé d'assemblage par résistance selon la revendication 1, caractérisé en ce que la couche intermédiaire (5) est en un matériau amorphe.

9. Procédé d'assemblage par résistance selon la revendication 1, caractérisé en ce que la température de solidification de la couche intermédiaire (5) est inférieure à 700°C.

10. Procédé d'assemblage par résistance selon la revendication 1, caractérisé en ce que la durée de la circulation du courant entre les électrodes (1, 2) pour un point d'assemblage, est inférieure à une milliseconde, de préférence inférieure à 0,2 milliseconde.

11. Procédé d'assemblage par résistance selon la revendication 1, caractérisé en ce que la dimension de la couche intermédiaire (5) en direction de l'effort de pression agissant sur les parties à assembler, ne dépasse la dimension dans la même direction d'aucune des parties à assembler (bandes métalliques amorphes 3, 4).

12. Procédé d'assemblage par résistance selon la revendication 1, caractérisé en ce que la couche intermédiaire (5) contient un matériau métallique dont la température de solidification est inférieure à celle des parties à assembler.

FIG 1

0 191 300

FIG 2

FIG 3

FIG 4

0 191 300

FIG 5

FIG 6